# EUROPÄISCHE PATENTSCHRIFT

(11) **EP 2 318 723 B1**
(45) Veröffentlichungstag und Bekanntmachung des Hinweises auf die Patenterteilung: **18.01.2012**
(21) Anmeldenummer: 09777522.5
(22) Anmeldetag: 29.07.2009
(51) Int. Cl.: F16B 5/02

(54) **BEFESTIGUNGSANORDNUNG MIT TOLERANZAUSGLEICH**
FASTENING ARRANGEMENT WITH TOLERANCE COMPENSATION
AGENCEMENT DE FIXATION AVEC COMPENSATION DES TOLERANCES

(30) Priorität: 28.08.2008 DE 202008011318 U
(43) Veröffentlichungstag der Anmeldung: 11.05.2011
(73) Patentinhaber: Böllhoff Verbindungstechnik GmbH, 33649 Bielefeld (DE)
(72) Erfinder: FIGGE, Hans-Ulrich, 33758 Schloss-Holte (DE); BURGER, Ingo, 33758 Schloss-Holte (DE)
(74) Vertreter: Heyer, Volker
(86) Internationale Anmeldenummer: PCT/EP2009/005496
(87) Internationale Veröffentlichungsnummer: WO 2010/022841

(56) Entgegenhaltungen:
- EP-A- 1 780 424
- DE-A1-102005 037 192
- DE-B3-102006 034 463
- DE-U1-202006 012 493
- DE-U1-202007 008 152
- DE-U1-202007 008 154

## Beschreibung

Die vorliegende Erfindung betrifft eine Befestigungsanordnung zum Befestigen eines Bauteils B an einem Bauteil A mit selbsttätigem Ausgleich von Toleranzen im Abstand zwischen den beiden Bauteilen.

Derartige Befestigungsanordnungen mit Toleranzausgleich sind in großer Vielfalt bekannt. Sie bestehen üblicherweise aus einer Verstellbuchse mit einem sogenannten Mitschleppabschnitt, der mit einer Befestigungsschraube eine Reibschlussverbindung eingehen kann. Beim Drehen der Befestigungsschraube wird daher die Verstellbuchse mitgedreht, bis sie sich an eines der beiden Bauteile anlegt, worauf dann beim Weiterdrehen der Befestigungsschraube und entsprechende Erhöhung des Drehmomentes die Reibschlussverbindung überwunden wird, so dass dann die beiden Bauteile durch die Befestigungsschraube über die Verstellbuchse miteinander verspannt werden können.

Aus der europäischen Patentanmeldung EP 1 780 424 ist eine derartige Toleranzausgleichsanordnung bekannt. Diese Anordnung umfasst ein einstückig ausgebildetes Aufnahmeelement und ein einstückig ausgebildetes Verstellelement. Das Aufnahmeelement hat einen Befestigungsabschnitt mit einem selbstfurchenden und/oder -formenden Gewinde, das zum Herstellen einer Schraubverbindung in das eine Bauteil einschraubbar ist, wobei die Schraubverbindung eine Kunststoff-in-Kunststoff-Schraubverbindung ist.

DE 20 2006 012 493 U1 beschreibt eine Befestigungseinrichtung. Diese Befestigungseinrichtung setzt sich zusammen aus einer Basiseinheit, die aus einer am Bauteil A festlegbaren Blindnietmutter, einer Verstellgewindemutter und einem hülsenförmigen Käfig besteht, welcher die Verstellgewindemutter aufnimmt und mit der Blindnietmutter verbindet, einer Verstelleinheit, die aus einer Gewindehülse, einer Anlageplatte und einer Mitnehmerbuchse besteht, welche die Gewindehülse und die Anlageplatte verbindet, wobei die Gewindehülse der Verstelleinheit in die Verstellgewindemutter der Basiseinheit über eine erste Ge windepaarung einer ersten Gangrichtung einschraubbar ist, und einer Befestigungsschraube, die über eine zweite Gewindepaarung einer entgegengesetzten zweiten Gangrichtung in die am Bauteil A festgelegte Blindnietmutter einschraubbar ist und mit der Mitnehmerbuchse eine lösbare Mitschleppverbindung bildet, um beim Drehen der Befestigungsschraube die Verstelleinheit mitzudrehen und dadurch die Anlageplatte zwecks Toleranzausgleich in Anlage mit dem Bauteil B zu bewegen.

Der vorliegenden Erfindung liegt die Aufgabe zugrunde, eine Befestigungsanordnung mit selbsttätigem Toleranzausgleich der angegebenen Gattung so weiterzubilden, dass die Montage der Befestigungsanordnung vereinfacht wird.

Die Befestigungsanordnung gemäß der vorliegenden Erfindung ist in Anspruch 1 definiert.

Die Befestigungsanordnung dient dem Befestigen eines Bauteils B an einem Bauteil A mit selbsttätigem Ausgleich von Toleranzen im Abstand zwischen dem Bauteil B und dem Bauteil A. Die erfindungsgemäße Befestigungsanordnung weist die folgenden Merkmale auf: ein Aufnahmeelement und ein Verstellelement, das über eine erste Gewindepaarung einer ersten Gangrichtung mit dem Aufnahmeelement verschraubbar ist, während durch eine Öffnung von Aufnahmeelement und Verstellelement eine Befestigungsschraube einsetzbar ist, die über eine zweite Gewindepaarung einer der ersten entgegengesetzten zweiten Gangrichtung in das Aufnahmeelement einschraubbar und mit dem Verstellelement durch eine lösbare Mitschleppverbindung verbindbar ist, um beim Drehen der Befestigungsschraube das Verstellelement mitzudrehen und dadurch in Anlage mit dem Bauteil B zu bewegen, und deren Verstellelement aus einem innerhalb eines Gewindeelements drehfest und schwimmend angeordneten Mitschleppers besteht, so dass eine Fehlausrichtung der Befestigungsschraube beim Einsetzen in das Verstellelement ausgleichbar ist.

In der erfindungsgemäßen Befestigungsanordnung ist das Verstellelement zweiteilig ausgebildet. Diese zweiteilige Ausbildung bestehend aus Gewindeelement und Mitschlepper gewährleistet einen Ausgleich von Montagefehlern beim Einsetzen der Befestigungsschraube in die Befestigungsanordnung. Da der Mitschlepper innerhalb des Gewindeelements schwimmend angeordnet ist, ist er in der Lage, bezogen auf seine Längsachse radiale bzw. laterale Ausgleichsbewegungen innerhalb des Gewindeelements auszuführen. Bei einer entsprechenden Formgestaltung von Gewindeelement und Mitschlepper besteht ebenfalls bevorzugt die Möglichkeit, dass eine winklige Ausgleichsbewegung durch den Mitschlepper innerhalb des Gewindeelements ausgeführt wird. Das bedeutet, dass bezogen auf die Längsachse des Gewindeelements die Längsachse des Mitschleppers eine nicht parallele geneigte Position einnehmen kann. Basierend auf dieser konstruktiven Grundlage ist die Befestigungsschraube mit einer gewissen Orientierungsungenauigkeit in die Befestigungsanordnung einsetzbar, ohne dass die Befestigungsschraube innerhalb der Befestigungsanordnung blockiert wird. Zudem wird der Toleranzausgleich durch die Befestigungsanordnung durch die fehlerhaft orientierte Befestigungsschraube nicht beeinträchtigt, da der Mitschlepper der Fehlorientierung der Befestigungsschraube innerhalb des Gewindeelements folgen kann. Er wird somit auch beim Drehen der Befestigungsschraube auf das Bauteil B zugestellt.

Gemäß einer bevorzugten Ausführungsform der Befestigungsanordnung umgibt ein Innenkanal des Gewindeelements derart den Mitschlepper, dass der Mitschlepper innerhalb des Gewindeelements lateral, insbesondere in radialer Richtung bezogen auf das Gewindeelement, versetzbar ist. Es ist zudem ergänzend oder alternativ bevorzugt, dass sich der Innenkanal des Gewindeelements zumindest teilweise entlang seiner axialen Richtung verjüngt, so dass der Mitschlepper axial verkippt bezogen auf die Längsachse des Gewindeelements innerhalb des Gewindeelements anordenbar ist.

Das Gewindeelement der Befestigungsanordnung ist mit einem entsprechend den Anforderungen geformten Innenkanal ausgestattet. Dieser Innenkanal umfasst beispielsweise eine zylindrische Form mit einem Innendurchmesser, der größer ausgebildet ist als der aufzunehmende Bereich des Mitschleppers. Dies gewährleistet, dass aufgrund der schwimmenden Lagerung des Mitschleppers innerhalb des Gewindeelements dieser in radialer Richtung bezogen auf das Gewindeelement innerhalb des Innenkanals verschiebbar ist. Auf diese Weise können die bereits oben angesprochenen Fehlorientierungen der Befestigungsschraube ausgeglichen werden. Gemäß einer weiteren Ausgestaltung ist ebenfalls ein Ausgleich von winkligen Fehlorientierungen der Befestigungsschraube durch eine winklige Orientierung des Mitschleppers möglich. In dieser Alternative verjüngt sich der Innenkanal zumindest in einem Teilbereich, so dass er eine konische Kontur aufweist. Der konischen Kontur folgend kann der Mitschlepper eine Fehlausrichtung der Befestigungsschraube ausgleichen, so dass auch auf diese Weise eine erleichterte Installation der Befestigungsanordnung unterstützt wird.

Zur Gewährleistung der drehfesten Verbindung zwischen Mitschlepper und Gewindeelement weist der Mitschlepper bevorzugt mindestens eine in radialer Richtung vorstehende Haltenase auf, die in einer Vertiefung des Gewindeelements einrastbar ist.

Zudem umfasst der Mitschlepper einer weiteren Ausführungsform eine oval geformte Transportsicherung, deren mindestens ein radial nach außen ragender Vorsprung an einer Innenseite des Aufnahmeelements verriegelbar ist. Diese oval geformte Transportsicherung ist gemäß einer Ausführungsform derart ausgebildet, dass beim Durchführen der Befestigungsschraube durch die oval geformte Transportsicherung der mindestens eine radial nach außen ragende Vorsprung durch eine radial nach innen gerichtete Verformungsbewegung der Transportsicherung aus der Innenseite des Aufnahmeelements entriegelbar ist.

Die ovale Form der Transportsicherung ist somit an den Durchmesser der Befestigungsschraube derart angepasst, dass der im Durchmesser kleinere Bereich des Ovals kleiner ist als der Durchmesser der Befestigungsschraube und dass der im Durchmesser größere Bereich des Ovals größer ist als der Durchmesser der Befestigungsschraube. Durch diese Dimensionierung der oval geformten Transportsicherung und der Befestigungsschraube drückt die Befestigungsschraube beim Einsetzen in die oval geformte Transportsicherung den schmaleren Bereich auseinander und zieht auf diese Weise den breiteren Bereich des Ovals zusammen, so dass sich die Transportsicherung in eine annähernd runde Form verformt. Diese Verformungsbewegung bewegt den verriegelnden Vorsprung von der Innenseite des Aufnahmeelements weg, so dass das Verstellelement bestehend aus Mitschlepper und Gewindeelement innerhalb des Aufnahmeelements drehbar ist.

Gemäß einer weiteren Ausgestaltung der vorliegenden Befestigungsanordnung umfasst der Mitschlepper zwei gegenüber voneinander angeordnete und in axiale Richtung des Mitschleppers verlaufende Schleppstege, die federnd radial nach innen ragend eine Durchgangsöffnung für die Befestigungsschraube verengen. Die Schleppstege sind vorzugsweise bogenförmig ausgebildet. Sie verbinden zudem die oval geformte Transportsicherung mit einem Anlageabschnitt des Mitschleppers.

Wie oben bereits erwähnt worden ist, ist die Befestigungsschraube in ein Gewinde des Aufnahmeelements einschraubbar. Dieses Gewinde des Aufnahmeelements wird gemäß einer Ausführungsform durch eine Mutter bereitgestellt, die in eine Haltekammer des Aufnahmeelements einsetzbar ist. In dieser Haltekammer wird die Mutter beispielsweise durch Festklemmen befestigt. In Anpassung an die Befestigungsschraube ist es denkbar, dass die Mutter und die Befestigungsschraube jeweils ein zueinander passendes metrisches Gewinde aufweisen.

Weitere vorteilhafte Ausgestaltungen der Erfindung gehen aus der folgenden Beschreibung, den Zeichnungen und anhängenden Ansprüchen hervor.

Anhand der Zeichnungen werden Ausführungsbeispiele der Erfindung näher erläutert. Es zeigen:
- Fig. 1: eine Schnittdarstellung durch die bevorzugte Befestigungsanordnung ohne Befestigungsschraube,
- Fig. 2: eine Schnittdarstellung durch die bevorzugte Befestigungsanordnung mit Befestigungsschraube und installiert zwischen Bauteil A und B,
- Fig. 3 a und b: eine perspektivische Ansichten des Mitschleppers,
- Fig. 4 a und b: eine perspektivische Ansicht des Gewindeelements,
- Fig. 5 a und b: eine perspektivische Ansichten des Verstellelements bestehend aus Gewindeelement und Mitschlepper,
- Fig. 6: eine Seitenansicht der Befestigungsanordnung,
- Fig. 7: ein Schnitt entlang der Linie A-A aus Fig. 6,
- Fig. 8: ein Schnitt entlang der Linie B-B aus Fig. 6,
- Fig. 9: eine Ansicht von unten des Verstellelement bestehend aus Mitschlepper und Gewindeelement,
- Fig. 10: eine Ansicht von oben des Verstellelements bestehend aus Gewindeelement und Mitschlepper,
- Fig. 11: ein Schnitt entlang der Linie A-A aus Fig. 10,
- Fig. 12: ein Schnitt entlang der Linie B-B aus Fig. 10,
- Fig. 13 a bis c: eine Zusammenbausequenz der Befestigungsanordnung mit Mutter und
- Fig. 14 a bis c: eine Installationssequenz der Befestigungsanordnung in einem Schlüsselloch im Bauteil A.

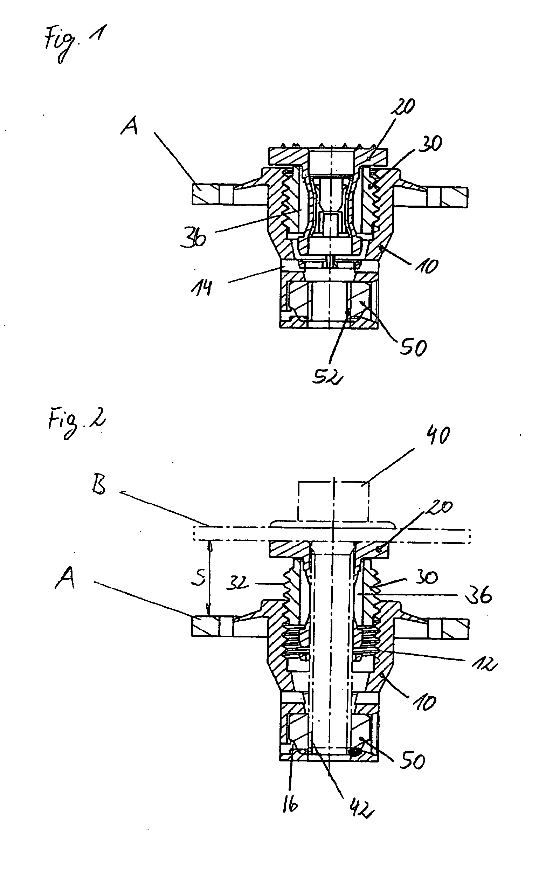

Wie in Fig. 1 dargestellt ist, besteht die Befestigungsanordnung aus einem Aufnahmeelement 10 und einem Verstellelement 20, 30. Das Aufnahmeelement 10 und das Verstellelement 20, 30 sind über eine erste Gewindepaarung 12, 32 miteinander verbunden. Das eine Gewinde 12 der ersten Gewindepaarung befindet sich an der Innenseite des Aufnahmeelements 10. Das andere Gewinde 32 befindet sich an der Außenseite eines Gewindeelements 30, das gemeinsam mit einem Mitschlepper 20 das Verstellelement 20, 30 bildet.

Fig. 2 zeigt eine Schnittdarstellung der zwischen den Bauteilen A und B installierten Befestigungsanordnung. Durch das Einschrauben einer Befestigungsschraube 40 in die Befestigungsanordnung verlängert sich die Befestigungsanordnung soweit, bis ein Abstand S zwischen den Bauteilen A und B ausgeglichen ist. Beim Einschrauben der Befestigungsschraube 40 in ein Gewinde 52 des Aufnahmeelements 10 wird das Verstellelement 20, 30 aus dem Aufnahmeelement 10 herausgeschraubt. Diese selbsttätige Verstellbewegung der Befestigungsanordnung basiert darauf, dass die Gewindepaarung eines Gewindes 42 der Befestigungsschraube 40 und eines Gewindes 52 des Aufnahmeelements 10 eine der Gewindepaarung 12, 32 entgegengesetzte Gangrichtung aufweist.

Das Gewinde 52 des Aufnahmeelements 10 wird bevorzugt mit Hilfe einer Mutter 50 bereitgestellt. Die Mutter 50 ist in einer Haltekammer 16 des Aufnahmeelements 10 angeordnet. Gehalten wird die Mutter 50 in der Haltekammer 16 vorzugsweise über einen Presssitz zwischen den Wänden oder einem Haltesteg und den Wänden der Haltekammer 16 oder über die Verbindung mit der Befestigungsschraube 40. Gemäß einer Ausführungsform vorliegender Erfindung sind die Gewinde 42 und 52 zueinander passende metrische Gewinde. Der Vorteil einer Befestigungsschraube 40 mit metrischem Gewinde im Vergleich zum Stand der Technik besteht darin, dass bei der metrischen Verschraubung das Gewinde 42 durch den Mitschlepper 20 durchgesteckt werden kann. Hierdurch hat ein Drücken des Werkers auf die Befestigungsschraube 40 während des Schraubvorgangs keinen Einfluss auf die Funktion der Befestigungsanordnung. Die Befestigungsschraube 40 kann bis zur Mutter 50 in die Befestigungsanordnung eingesteckt werden. Alle Druckkräfte werden ab diesem Zeitpunkt direkt über das Gewinde 52 an die Mutter 50 übertragen.

Gemäß einer weiteren nicht dargestellten Ausführungsform ist es ebenfalls bevorzugt, eine Befestigungsschraube 40 mit selbstschneidendem Gewinde 42 einzusetzen. Diese würde sich innerhalb einer Öffnung eines Endbereichs des Aufnahmeelements 10 befestigen, der anstelle der Haltekammer 16 ausgebildet ist.

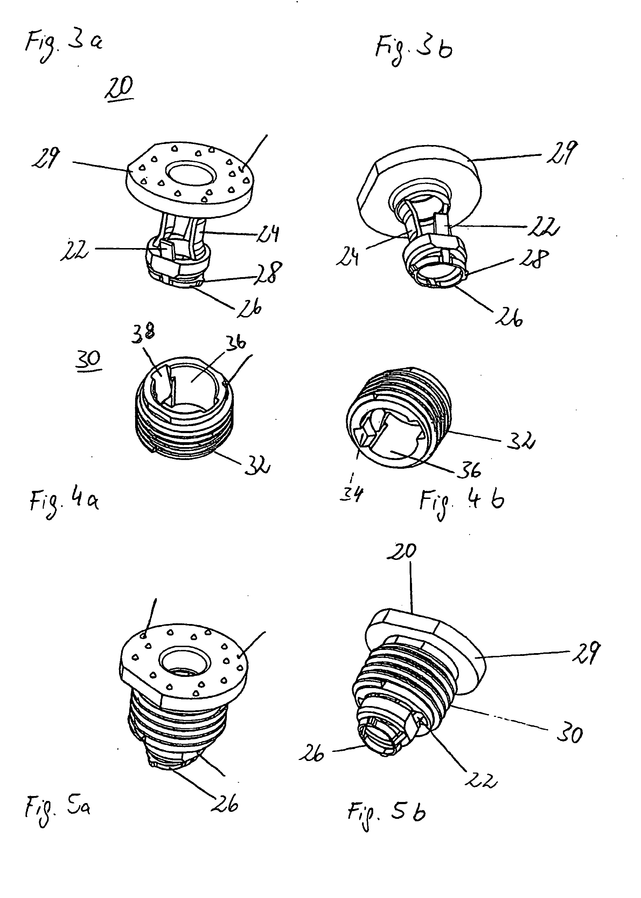

Das Verstellelement 20, 30 besteht aus dem Gewindeelement 30, in dessen Innenkammer 36 der Mitschlepper 20 angeordnet ist. In den Figuren 3a, b ist der Mitschlepper 20 dargestellt. Der Mitschlepper 20 umfasst einen Anlageabschnitt 29 zur Anlage am Bauteil B. Der Anlageabschnitt 29 weist Erhöhungen in Richtung des Bauteils B auf, die sich ins Bauteil B eingraben. Auf diese Weise bildet sich ein Formschluss zwischen dem Anlageabschnitt 29 und dem Bauteil B und somit ein besserer Halt zwischen der Befestigungsanordnung und dem Bauteil B heraus. Zudem weist der Anlageabschnitt 29 eine zentrale Öffnung auf, durch die die Befestigungsschraube 40 eingesetzt wird.

Unterhalb des Anlageabschnitts 29 erstrecken sich in axialer Richtung des Mitschleppers 20 mindestens zwei Schleppstege 24. Die Schleppstege 24 sind gegenüber voneinander angeordnet. Zudem weisen sie einen bogenförmigen Verlauf auf, so dass sie federnd radial nach innen ragend einen Durchgangsbereich der Befestigungsschraube 40 durch den Mitschlepper verengen.

An ihrem dem Anlageabschnitt 29 abgewandten Ende sind die Schleppstege 24 über eine ringförmige Struktur miteinander verbunden. An der ringförmigen Struktur ist mindestens eine in radialer Richtung nach außen vorstehende Haltenase 22 angeordnet. Die Haltenase 22 greift in eine an sie angepasste Vertiefung 34 an der gegenüberliegenden Innenseite des Gewindeelements 30 ein. Indem die Haltenase 22 in der Vertiefung 34 einrastet, entsteht eine drehfeste Verbindung zwischen dem Mitschlepper 20 und dem Gewindeelement 30. Bevorzugt sind zwei Haltenasen 22 um 90° versetzt von den Schleppstegen 24 angeordnet.

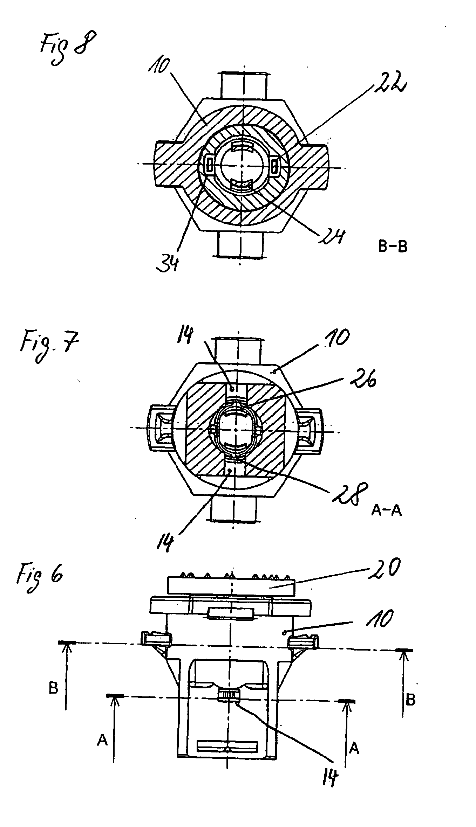

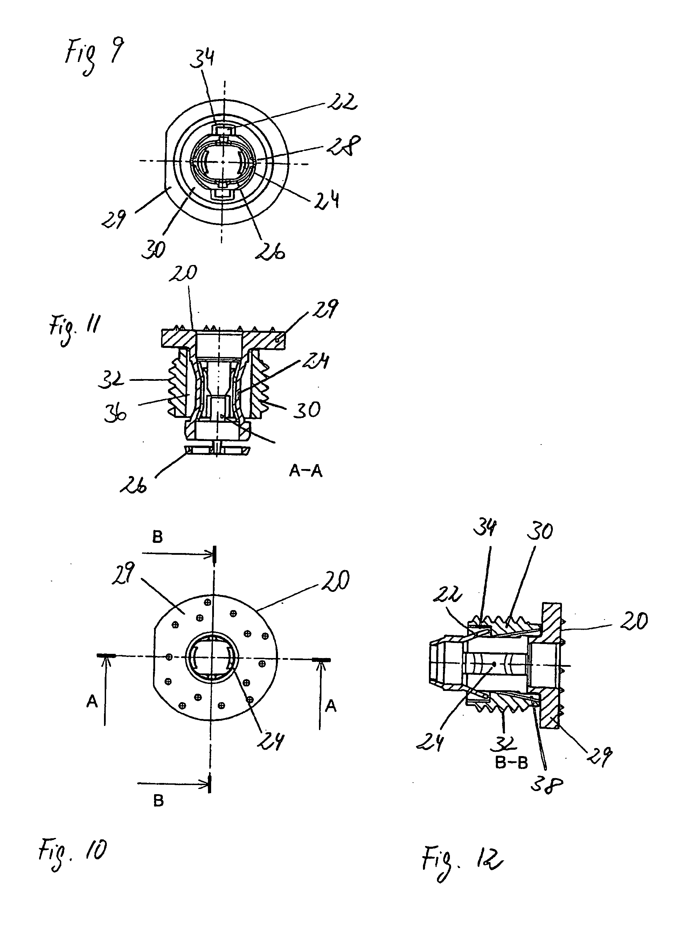

Um ein einfacheres und lagegenaues Einsetzen des Mitschleppers 20 in das Gewindeelement 30 zu gewährleisten, sind Führungsnuten 38 für die Haltenasen 22 an der Innenseite des Gewindeelements 30 ausgebildet. Wird der Mitschlepper 20 an das Gewindeelement 30 eingesetzt, gleiten die Haltenasen 22 entlang der Führungsnuten 38 und rasten dann in den Vertiefungen 34 ein. Dies ist in den Figuren 8, 9, 11, 12 veranschaulicht.

Der Innenkanal 36 des Gewindeelements 30 weist einen größeren Durchmesser als der im Innenkanal 36 aufzunehmende Teil des Mitschleppers 20 auf. In gleicher Weise sind die Vertiefungen 34 in lateraler Richtung größer ausgebildet als die aufzunehmenden Haltenasen 22, so dass sich diese darin bewegen können. Die Überdimensionierung des Innenkanals 36 und der Vertiefungen 34 im Vergleich zum Mitschlepper 20 führt zu einer schwimmenden Lagerung des Mitschleppers 20 am Gewindeelement 30. Auf dieser Grundlage kann sich der Mitschlepper 20 beim Einsetzen der Befestigungsschraube 40 innerhalb des Gewindeelements 30 schwimmend in radialer Richtung, also lateral, verschieben, um Fehlausrichtungen der Befestigungsschraube 40 auszugleichen. In Fig. 8, dem Schnitt entlang der Linie B-B aus Fig. 6, ist erkennbar, dass trotz einer nicht mittigen Anordnung des Mitschleppers 20 die Installation der Befestigungsschraube 40 gewährleistet ist.

Gemäß einer weiteren nicht dargestellten Ausführungsform hat der Innekanal 36 anstelle der zylindrischen Form in Fig. 4a, b eine zumindest teilweise konische Form. Die konische Form verläuft derart, dass der Bereich des Innenkanals 36 mit dem größten Durchmesser an den Anlageabschnitt 29 des Mitschleppers 20 angrenzt. Die konische Form des Innenkanals 36 gewährleistet ein Verkippen des Mitschleppers 20 innerhalb des Gewindeelements 30. Auf diese Weise ist der Mitschlepper 20 axial verkippt bezogen auf die Längsachse des Gewindeelements 30 innerhalb des Gewindeelements 30 anordenbar. Zu diesem Zweck verjüngt sich der Innenkanal 36 beispielsweise konisch beginnend am Anlageabschnitt 29 bis zu seinem Ende nahe den Vertiefungen 34. Es ist ebenfalls denkbar, dass der Innenkanal 36 als Doppelkonus ausgebildet ist, der sich beginnend an beiden Enden des Innenkanals 36 in Richtung auf einen Punkt nahe der Innenkanalmitte verjüngt.

Mit Hilfe der oben beschriebenen Konstruktionen wird eine schwimmende Anordnung des Mitschleppers 20 im Gewindeelement 30 realisiert, durch die der Mitschlepper 20 lateral versetzbar und/oder axial verkippbar in Bezug auf das Gewindeelement 30 angeordnet ist.

Gemäß einer weiteren bevorzugten Ausführungsform umfasst die Befestigungsanordnung eine Transportsicherung 26. Diese dient dazu, ein Lösen der Befestigungsanordnung im vormontierten Zustand zu verhindern. Die Transportsicherung 26 ist angrenzend an die ringförmige Struktur des Mitschleppers 20 angeordnet. Sie wird durch einen oval geformten Ring 26 gebildet, der vorzugsweise über Stege an der ringförmigen Struktur des Mitschleppers 20 befestigt ist.

Die oval geformten Transportsicherung 26 umfasst einen Bereich größeren und einen Bereich kleineren Durchmessers. Die oval geformte Transportsicherung 26 ist derart dimensioniert, dass der kleinere Durchmesser kleiner ist als der Durchmesser der Befestigungsschraube 40 und dass der größere Durchmesser größer ist als der Durchmesser der Befestigungsschraube 40. Basierend auf dieser Dimensionierung erfolgt beim Einschrauben der Befestigungsschraube in den Mitschlepper 20 ein Aufdrücken der oval geformten Transportsicherung 26. Dieses Aufdrücken des Bereichs kleineren Durchmessers erfolgt auf Kosten des Bereichs größeren Durchmessers, so dass die oval geformte Transportsicherung 26 nach dem Einschrauben der Befestigungsschraube 40 eine annähernd kreisförmige Gestalt aufweist.

Im Bereich größeren Durchmessers der Transportsicherung 26 ist mindestens ein radial nach außen ragender Vorsprung 28 angeordnet. Zum Herstellen einer Transportsicherung greift der Vorsprung 28 in Kanäle, Fenster oder Vertiefungen 14 an der Innenseite des Aufnahmeelements 10 ein. Wird die Befestigungsschraube 40 in die oval geformte Transportsicherung 26 eingeschraubt, wird der Bereich kleineren Durchmessers aufgeweitet, während sich gleichzeitig der Bereich größeren Durchmessers in seinem Durchmesser verkleinert. Dies erzeugt eine radial nach innen gerichtete Verformungsbewegung des Bereichs größeren Durchmessers, so dass der mindestens eine Vorsprung 28 aus der Verriegelung in dem Kanal 14 gelöst wird. Nachdem dies erfolgt ist, kann ein Verstellen des Verstellelements 20, 30 über das Drehen der Befestigungsschraube 40 stattfinden.

Es ist ebenfalls denkbar, die oval geformte Transportsicherung 26 von außen über die Kanäle 14 zu lösen. Über die Kanäle 14 durch das Aufnahmeelement 10 sind die Vorsprünge 28 von außen zugänglich und können radial nach innen gedrückt werden. Dies kann beispielsweise durch ein darauf angepasstes Werkzeug erfolgen. Bei diesem Vorgehen ist es nicht erforderlich, dass diese Funktion über die Befestigungsschraube 40 realisiert wird.

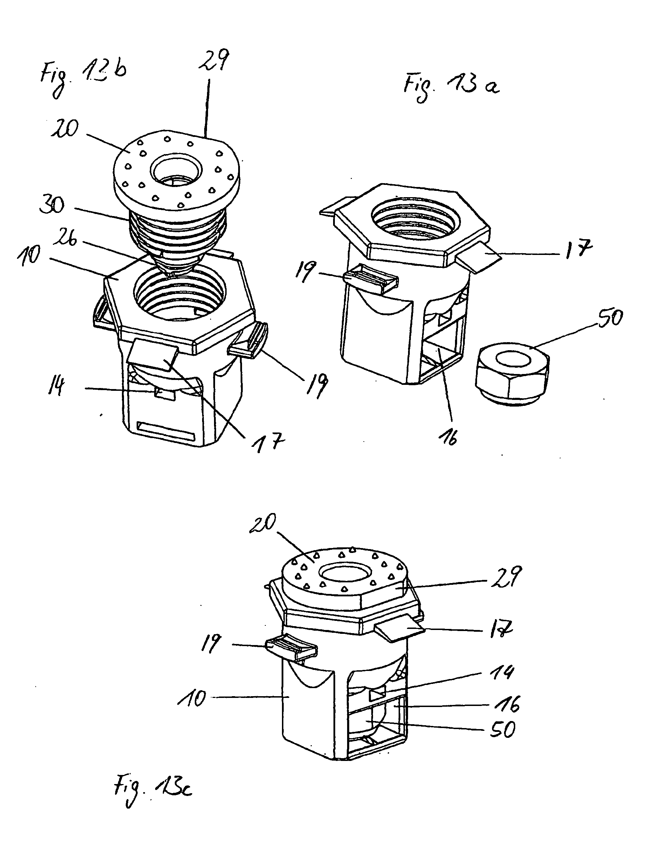

Die Figuren 13 a bis c zeigen die Herstellung der Befestigungsanordnung im vormontierten Zustand. Zu diesem Zweck wird die Mutter 50 in die Haltekammer 16 eingesetzt. Danach wird das Verstellelement 20, 30 in das Aufnahmeelement 10 eingeschraubt, bis die oval geformte Transportsicherung 26 das Verstellelement 20, 30 in dem Aufnahmeelement 10 hält. Nachdem dieser Schritt abgeschlossen ist, liegt die vormontierte Befestigungsanordnung vor, wie sie in Fig. 13 c dargestellt ist.

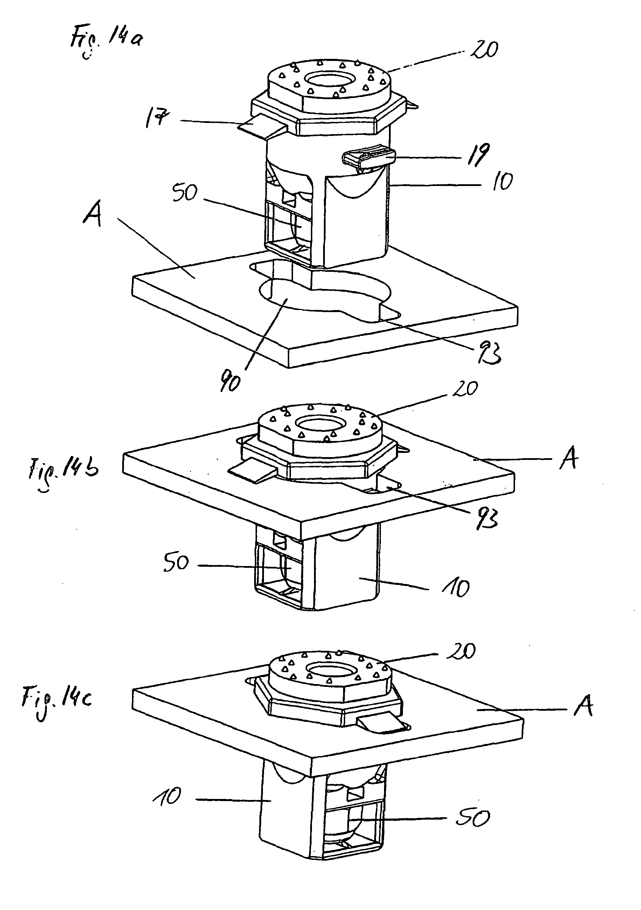

Die Bauteile A und B bestehen vorzugsweise aus Kunststoff. Das Bauteil A besteht beispielsweise aus einem glasfaserverstärkten PP, während das Bauteil B aus einem weicheren Kunststoff, beispielsweise einem PP mit Talkum besteht. Es ist ebenfalls bevorzugt, das Bauteil A aus Metall oder anderen Werkstoffen herzustellen. Wie man in Fig. 14a erkennen kann, umfasst das Bauteil A ein Schlüsselloch 90, in dem das Aufnahmeelement 10 aufnehmbar und befestigbar ist. Das Schlüsselloch 90 ist annähernd komplementär zur Silhouette des Aufnahmeelements 10 innerhalb einer ersten Radialebene ausgebildet. In der ersten Radialebene liegen beispielsweise zwei Haltevorsprünge 19. Ist eine andere Anzahl von Haltevorsprüngen 19 vorgesehen, ist die Form des Schlüsselloch 90 entsprechend angepasst, um ein Einsetzen des Aufnahmeelements 10 in das Schlüsselloch 90 zu gewährleisten. Der innere Durchmesser des Schlüssellochs 90 ist zudem kleiner als der Außendurchmesser eines oberen Flansches oder Rands des Aufnahmeelements 10, damit das Aufnahmeelement 10 formschlüssig im Bauteil A gehalten werden kann.

Nach dem Einsetzen des Aufnahmeelements 10 in das Schlüsselloch 90 in passender Ausrichtung, sind ein Federelement 17 und der Flansch des Aufnahmeelements 10 oberhalb des Bauteils A und der Haltevorsprung 19 unterhalb des Bauteils A angeordnet. Wird das Aufnahmeelement 10 in Richtung des Bauteils A gedrückt und nachfolgend um seine Längsachse gedreht, werden die Haltevorsprünge 19 von den Öffnungen 93 zum Einsetzen weg bewegt. Aufgrund dieser Drehung entsteht eine formschlüssige Verbindung zwischen dem Bauteil A und dem Aufnahmeelement 10.

Wie in Fig. 14a zu erkennen ist, sind das Federelement 17 und der Haltevorsprung 19 umfänglich um 90° versetzt zueinander angeordnet. Andere winklige Anordnungen sind ebenfalls denkbar, die in Abstimmung mit dem Bauteil A realisierbar sind. Nach dem Einsetzen des Aufnahmeelements 10 in das Schlüsselloch 90, wobei die Haltevorsprünge 19 in Ausrichtung mit der Öffnung 93 sind, wie es in Fig. 14b gezeigt ist, wird das Aufnahmeelement 10 um seine Längsachse gedreht. Vorzugsweise wird das Aufnahmeelement 10 um einen Winkel von 90° um seine Längsachse gedreht, so dass die durch die Oberfläche des Bauteils A vorgespannten Federelemente 17 in die Öffnungen 93 einschnappen (siehe Fig. 14c). Es ist ebenfalls möglich, Vertiefungen oder Verriegelungsöffnungen auf/in der Oberfläche des Bauteils A vorzusehen, die nicht mit den Einsetzöffnungen 93 der Haltevorsprünge 19 identisch sind. Diese Vertiefungen oder Verriegelungsöffnungen (nicht gezeigt) dienen dann lediglich dem Verriegeln/Einschnappen der Federelemente 17 und nicht dem Einsetzen der Haltevorsprünge 19.

Die Federelemente 17 im verriegelten Zustand sind in Fig. 14c dargestellt. Das Bauteil A ist in diesem Zustand zwischen dem Flansch des Aufnahmeelements 10 und dem Haltevorsprung 19 eingeklemmt, so dass eine form- und kraftschlüssige Verbindung zwischen dem Bauteil A und dem Aufnahmeelement 10 vorliegt.

In Zusammenfassung der obigen Beschreibung ist somit das Einsetzen und Befestigen des Aufnahmeelements im Bauteil A mit folgenden Schritten beschreibbar: a) Ausrichten von Schlüsselloch 90 und Aufnahmeelement 10 zueinander, b) Einsetzen des Aufnahmeelements 10 in das Schlüsselloch 90, c) Drehen des Aufnahmeelements 10 um seine Längsachse, so dass das Bauteil A zwischen dem Flansch und dem Haltevorsprung 19 gehalten wird. In gleicher Weise kann das Entfernen des Aufnahmeelements 10 mit folgenden Schritten zusammengefasst werden: a) Drehen des Aufnahmeelements 10 um seine Längsachse, wodurch verriegelnde Federelemente 17 entfernt werden, b) Ausrichten des Aufnahmeelements 10 zum Schlüsselloch 90 und c) Entfernen des Aufnahmeelements 10 aus dem Schlüsselloch 90.

## Patentansprüche

1. Befestigungsanordnung zum Befestigen eines Bauteils B an einem Bauteil A mit selbsttätigem Ausgleich von Toleranzen im Abstand (S) zwischen dem Bauteil B und dem Bauteil A, die die folgenden Merkmale aufweist:
a. ein Aufnahmeelement (10) und ein Verstellelement (20, 30), das über eine erste Gewindepaarung (12, 32) einer ersten Gangrichtung mit dem Aufnahmeelement (10) verschraubbar ist, während
b. durch eine Öffnung von Aufnahmeelement (10) und Verstellelement (20, 30) eine Befestigungsschraube (40) einsetzbar ist, die über eine zweite Gewindepaarung (42, 52) einer der ersten entgegengesetzten zweiten Gangrichtung in das Aufnahmeelement (10) einschraubbar und mit dem Verstellelement (20, 30) durch eine lösbare Mitschleppverbindung (24) verbindbar ist, um beim Drehen der Befestigungsschraube (40) das Verstellelement (20, 30) mitzudrehen und dadurch in Anlage mit dem Bauteil B zu bewegen, und deren
c. Verstellelement (20, 30) aus einem innerhalb eines Gewindeelements (30) drehfest angeordneten Mitschleppers (20) besteht, **dadurch gekennzeichnet, dass** der Mitschlepper (20) schwimmend innerhalb des Gewindeelements (30) angeordnet ist, so dass eine Fehlausrichtung der Befestigungsschraube (40) beim Einsetzen in das Verstellelement (20, 30) ausgleichbar ist.

2. Befestigungsanordnung gemäß Anspruch 1, in der der Mitschlepper (20) durch seine schwimmende Anordnung lateral versetzbar und/oder axial verkippbar in Bezug auf das Gewindeelement (30) ist.

3. Befestigungsanordnung gemäß einem der vorhergehenden Ansprüche, in der ein Innenkanal (36) des Gewindeelements (30) derart den Mitschlepper (20) umgibt, dass der Mitschlepper (20) innerhalb des Gewindeelements (30) lateral, insbesondere in radialer Richtung bezogen auf das Gewindeelement (30), versetzbar ist, und/oder in der sich der Innenkanal des Gewindelements (30) zumindest teilweise entlang seiner axialen Richtung verjüngt, so dass der Mitschlepper (20) axial verkippt bezogen auf die Längsachse des Gewindeelements (30) innerhalb des Gewindeelements (30) anordenbar ist.

4. Befestigungsanordnung gemäß einem der vorhergehenden Ansprüche, deren Mitschlepper (20) mindestens eine in radialer Richtung vorstehende Haltenase (22) aufweist, die in einer Vertiefung (34) des Gewindeelements (30) einrastbar ist.

5. Befestigungsanordnung gemäß einem der vorhergehenden Ansprüche, deren Mitschlepper (20) eine oval geformte Transportsicherung (26) umfasst, deren mindestens ein radial nach außen ragender Vorsprung (28) an einer Innenseite des Aufnahmeelements (10) verriegelbar ist.

6. Befestigungsanordnung gemäß Anspruch 5, deren oval geformte Transportsicherung (26) derart ausgebildet ist, dass beim Durchführen der Befestigungsschraube (40) durch die oval geformte Transportsicherung (26) der mindestens eine radial nach außen ragende Vorsprung (28) durch eine radial nach innen gerichtete Verformungsbewegung der Transportsicherung (26) entriegelbar ist.

7. Befestigungsanordnung gemäß einem der vorhergehenden Ansprüche, deren Mitschlepper (20) zwei gegenüber voneinander angeordnete und in axialer Richtung des Mitschleppers (20) verlaufende Schleppstege (24) umfasst, die federnd radial nach innen ragend einen Durchgangsbereich für die Befestigungsschraube (40) verengen.

8. Befestigungsanordnung gemäß Anspruch 7, deren Schleppstege (24) bogenförmig ausgebildet sind und die oval geformte Transportsicherung (26) mit einem Anlageabschnitt (29) des Mitschleppers (20) verbinden.

9. Befestigungsanordnung gemäß einem der vorhergehenden Ansprüche, deren Aufnahmeelement (10) eine Haltekammer (16) aufweist, in die eine Mutter (50) mit einem passenden Gewinde (52) zur Befestigungsschraube (40) einsetzbar ist.

10. Befestigungsanordnung gemäß einem der vorhergehenden Ansprüche, die eine Befestigungsschraube (40) und eine Mutter (50) aufweist.

11. Befestigungsanordnung gemäß Anspruch 10, in der Mutter (50) und Befestigungsschraube (40) jeweils ein zueinander passendes metrisches Gewinde aufweisen.

12. Bauteil A in Kombination mit einer Befestigungsanordnung gemäß einem der vorhergehenden Ansprüche, während das Bauteil A ein Schlüsselloch (90) aufweist, in dem das Aufnahmeelement (10) der Befestigungsanordnung festlegbar ist.

## Claims

1. A fastening arrangement for fastening a component B to a component A having an automatic compensation of tolerances in the spacing (S) between the component B and component A that comprises the following features:
a. a receiving element (10) and an adjusting element (20, 30) that can be screwed to the receiving element (10) via a first thread pair (12, 32), having a first thread direction, while
b. a fastening screw (40) can be inserted through an opening in the receiving element (10) and adjusting element (20, 30), which screw can be screwed into the receiving element (10) via a second thread pair (42, 52) of a second thread direction opposite to the first, and can be connected to the adjusting element (20, 30) by a releasable drag connection (24), in order to co-rotate the adjusting element (20, 30) during the rotation of the fastening screw (40) and thereby move it into contact with the component B, and
c. adjusting element (20, 30) of the fastening screw comprises a drag element (20) disposed in a rotationally fixed manner inside a thread element (30) **characterized in that** the drag element (20) is disposed in a floating manner inside the thread element (30), so that a misalignment of the fastening screw (40) during insertion into the adjusting element (20, 30) can be compensated.

2. The fastening arrangement according to claim 1, in which the drag element (20) due to its floating arrangement can be moved laterally and/or can be tilted axially in relation to the thread element (30).

3. The fastening arrangement according to one of the preceding claims, in which an inner channel (36) of the thread element (30) encompasses the drag element (20) such that the drag element (20) can be moved laterally within the thread element (30), particularly in a radial direction relative to the thread element (30), and/or in which the inner channel of the thread element (30) is tapered at least partially along its axial direction so that the drag element (20) can be disposed within the thread element (30) tilted axially relative to the longitudinal axis of the thread element (30).

4. The fastening arrangement according to one of the preceding claims, whose drag element (20) comprises at least one retaining lug (22) projecting in a radial direction that can be latched into an indentation (34) of the thread element (30).

5. The fastening arrangement according to one of the preceding claims, whose drag element (20) comprises an oval-shaped transport lock (26) whose at least one projection (28) extending radially outward, can be locked to an inner side of the receiving element (10).

6. The fastening arrangement according to claim 5, whose oval-shaped transport lock (26) is constructed so that during passage of the fastening screw (40) through the oval-shaped transport lock (26) the at least one projection (28) extending radially outward can be unlocked by a radially inward directed deformation movement of the transport lock (26).

7. The fastening arrangement according to one of the preceding claims, whose drag element (20) comprises two drag webs (24) disposed opposite each other and extending in the axial direction of the drag element (20) that, projecting elastically radially inward, constrict a through opening for the fastening screw (40).

8. The fastening arrangement according to claim 7, whose drag webs (24) are constructed arc-shaped and connect the oval-shaped transport lock (26) to a bearing section (29) of the drag element (20).

9. The fastening arrangement according to one of the preceding claims, whose receiving element (10) has a retaining chamber (16) into which a nut (50) having a thread (52) adapted to the fastening screw (40) can be inserted.

10. The fastening arrangement according to one of the preceding claims, which has a fastening screw (40) and a nut (50).

11. The fasting arrangement according to claim 10, in which nut (50) and fastening screw (40) each have a metric thread adapted to each other.

12. A component A in combination with a fastening arrangement according to one of the preceding claims, where the component A comprises a keyhole (90) into which the receiving element (10) of the fastening arrangement can be fixed.

## Revendications

1. Agencement de fixation pour fixer un élément B sur un élément A avec compensation automatique des tolérances à distance (S) entre l'élément B et l'élément A, qui présente les caractéristiques suivantes :
a. un élément de réception (10) et un élément d'ajustage (20, 30) qui peut être vissé sur l'élément de réception (10) par une première paire filetée (12, 32) d'une première direction de pas, tandis que
b. à travers une ouverture de l'élément de réception (10) et de l'élément d'ajustage (20, 30) peut être insérée une vis de fixation (40) qui peut être vissée dans l'élément de réception (10) par une seconde paire filetée (42, 52) d'une seconde direction de pas opposée à la première, et peut être reliée à l'élément d'ajustage (20, 30) par une liaison d'accouplement détachable (24) pour entraîner en rotation, lors de la rotation de la vis de fixation (40), l'élément d'ajustage (20, 30) et le déplacer ainsi en appui avec l'élément B, et dont
c. l'élément d'ajustage (20, 30) est formé d'un accoupleur (20) agencé de façon à résister à la torsion à l'intérieur d'un élément fileté (30), **caractérisé en ce que** l'accoupleur (20) est agencé flottant à l'intérieur de l'élément fileté (30), de sorte qu'un défaut d'alignement de la vis de fixation (40) peut être compensé lors de l'insertion dans l'élément d'ajustage (20, 30).

2. Agencement de fixation selon la revendication 1 dans lequel l'accoupleur (20) est mobile latéralement grâce à son agencement flottant et/ou axialement basculant par rapport à l'élément fileté (30).

3. Agencement de fixation selon une des revendications précédentes, dans lequel un canal interne (36) de l'élément fileté (30) entoure l'accoupleur (20), de telle sorte que l'accoupleur (20) est mobile latéralement à l'intérieur de l'élément fileté (30), en particulier dans la direction radiale par rapport à l'élément fileté (30), et/ou dans lequel le canal interne de l'élément fileté (30) se rétrécit au moins partiellement le long de sa direction axiale, de sorte que l'accoupleur (20) peut être agencé basculant axialement par rapport à l'axe longitudinal de l'élément fileté (30) à l'intérieur de l'élément fileté (30).

4. Agencement de fixation selon une des revendications précédentes, dont l'accoupleur (20) présente au moins un taquet de retenue (22) faisant saillie dans le sens radial qui peut être encliqueté dans une cavité (34) de l'élément fileté (30).

5. Agencement de fixation selon une des revendications précédentes, dont l'accoupleur (20) comprend une sûreté de transport ovale (26) dont au moins une saillie (28) dépassant radialement vers l'extérieur peut être verrouillée sur une face interne de l'élément de réception (10).

6. Agencement de fixation selon la revendication 5, dont la sûreté de transport ovale (26) est conçue de manière à ce que lors du passage de la vis de fixation (40) à travers la sûreté de transport ovale (26), la au moins une saillie (28) dépassant radialement vers l'extérieur est déverrouillable par un mouvement de déformation dirigé radialement vers l'intérieur de la sûreté de transport ovale (26).

7. Agencement de fixation selon une des revendications précédentes, dont l'accoupleur (20) comprend deux ailettes d'entraînement (24) agencées en vis-à-vis et s'étendant dans la direction axiale de l'accoupleur (20), lesquelles réduisent élastiquement une zone de passage de la vis de fixation (40) en débordant radialement vers l'intérieur.

8. Agencement de fixation selon la revendication 7, dont les ailettes d'entraînement (24) sont cintrées et relient la sûreté de transport ovale (26) à un segment d'appui (29) de l'accoupleur (20).

9. Agencement de fixation selon une des revendications précédentes, dont l'élément de réception (10) présente une chambre de retenue (16) dans laquelle peut être inséré un écrou (50) présentant un filet adapté (52) à la vis de fixation (40).

10. Agencement de fixation selon une des revendications précédentes, qui présente une vis de fixation (40) et un écrou (50).

11. Agencement de fixation selon la revendication 10, dans lequel l'écrou (50) et la vis de fixation (40) présentent respectivement un filet métrique adapté l'un à l'autre.

12. Elément A en combinaison avec un agencement de fixation selon une des revendications précédentes, tandis que l'élément A présente une encoche de clavette (90) dans laquelle peut être fixé l'élément de réception (10) de l'agencement de fixation.
